(19) Europäisches Patentamt
European Patent Office
Office européen des brevets

(11) EP 4 715 010 A1

(12) **EUROPEAN PATENT APPLICATION**
published in accordance with Art. 153(4) EPC

(43) Date of publication:
**25.03.2026 Bulletin 2026/13**

(21) Application number: **24807189.6**

(22) Date of filing: **13.05.2024**

(51) International Patent Classification (IPC):
***C08L 69/00*** ^(2006.01) ***C08G 64/06*** ^(2006.01)
***G02B 1/04*** ^(2006.01)

(52) Cooperative Patent Classification (CPC):
**C08G 64/06; C08L 69/00; G02B 1/04**

(86) International application number:
**PCT/JP2024/017655**

(87) International publication number:
**WO 2024/237237 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.05.2023 JP 2023082587**

(71) Applicant: **MITSUBISHI GAS CHEMICAL COMPANY, INC.**
**Chiyoda-ku**
**Tokyo 100-8324 (JP)**

(72) Inventors:
- **KATO Noriyuki**
  **Tokyo 100-8324 (JP)**
- **NISHIMORI Katsushi**
  **Tokyo 125-8601 (JP)**
- **MOTEGI Atsushi**
  **Tokyo 125-8601 (JP)**
- **ISHIHARA Kentaro**
  **Tokyo 100-8324 (JP)**
- **OCHI Noriaki**
  **Tokyo 125-8601 (JP)**
- **MATSUMOTO Mutsumi**
  **Tokyo 125-8601 (JP)**
- **SATO Atsuhiro**
  **Tokyo 125-8601 (JP)**

(74) Representative: **Hoffmann Eitle**
**Patent- und Rechtsanwälte PartmbB**
**Arabellastraße 30**
**81925 München (DE)**

(54) **THERMOPLASTIC RESIN COMPOSITION AND OPTICAL LENS INCLUDING SAME**

(57) The present invention addresses the problem of providing a thermoplastic resin composition that has favorable properties, facilitates thermoplastic resin recycling, and can reduce the environmental load. The problem is solved by the following thermoplastic resin composition. Specifically provided is a thermoplastic resin composition including, as a mixture, a first thermoplastic resin that includes a structural unit (A) derived from a monomer represented by general formula (1), and a second thermoplastic resin that includes a structural unit (B) derived from a monomer represented by any one of general formulas (2a)-(2c), wherein at least one of the first thermoplastic resin and the second thermoplastic resin is a copolymer having both the structural unit (A) and the structural unit (B), and the structural unit (A) content is 5-95 mol% and the structural unit (B) content is 5-95 mol% on the basis of the total number of structural units of the first thermoplastic resin and the second thermoplastic resin.

EP 4 715 010 A1

## Description

### TECHNICAL FIELD

The present invention relates to a composition comprising a thermoplastic resin, such as a polycarbonate, and more particularly to a composition comprising multiple predetermined types of thermoplastic resins as a mixture, and the like.

### BACKGROUND ART

Conventionally, thermoplastic resins used as optical materials are known (e.g., Patent literature 1 and 2). The thermoplastic resins for optical applications are usually required to have good properties, such as a good refractive index and Abbe number.

In addition, thermoplastic resins are usually molded into products such as lenses and optical films through a molding process such as injection molding.

### PRIOR ART DOCUMENTS

### PATENT DOCUMENTS

Patent literature 1: International Publication WO2014/073496
Patent literature 2: International Publication WO2015/166951

### SUMMARY OF THE INVENTION

### PROBLEMS TO BE SOLVED BY THE INVENTION

Conventional thermoplastic resins, such as those used primarily for optical applications, do not always have sufficiently satisfactory properties. For example, thermoplastic resins with good, well-balanced properties, including moldability and thermal stability in addition to refractive index, Abbe number, and birefringence, have not yet been realized.

Additionally, producing only a molded article through a molding process, such as injection molding, using a thermoplastic resin is not easy because it usually generates, in addition to the molded article, scrap materials originating from the thermoplastic resin injected into mold gaps, such as the sprue, runner, and gate. These scrap materials are often considered waste because they cannot be easily reused. Therefore, it can be said that the conventional thermoplastic resin molded articles have a problem of not being capable of achieving a sufficient yield level. There is also a need to reduce the environmental load during the molding process of the thermoplastic resin by facilitating recycling.

### MEANS FOR SOLVING THE PROBLEMS

As a result of diligent study to solve the above problems, the present inventors found that a thermoplastic resin composition obtained by mixing multiple predetermined types of thermoplastic resins can achieve good properties, primarily for optical applications, and that it can also reduce environmental load by facilitating the reuse of the thermoplastic resins.

The present invention includes the following.

[1] A thermoplastic resin composition comprising, as a mixture, a first thermoplastic resin containing a structural unit (A) derived from a monomer represented by general formula (1) below, and a second thermoplastic resin containing a structural unit (B) derived from a monomer represented by any of general formulas (2a)-(2c) below, wherein:

at least either one of the first thermoplastic resin and the second thermoplastic resin is a copolymer having both the structural unit (A) and the structural unit (B); and
the content of the structural unit (A) is 5-95 mol% and the content of the structural unit (B) is 5-95 mol%, relative to the total number of structural units of the first thermoplastic resin and the second thermoplastic resin:

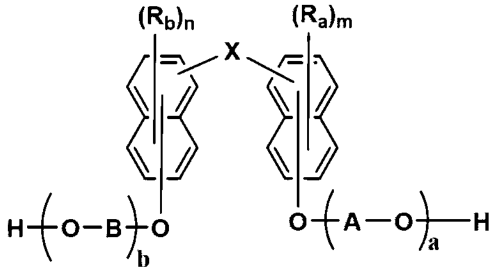

(1)

(in general formula (1),

$R_a$ and $R_b$ are each independently selected from the group consisting of a hydrogen atom, a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, an optionally substituted aryl group with 6-20 carbon atoms, an optionally substituted heteroaryl group with 6-20 carbon atoms containing one or more heteroatoms selected from O, N and S, an optionally substituted aryloxy group with 6-20 carbon atoms, and -C≡C-$R_h$,

$R_h$ represents an optionally substituted aryl group with 6-20 carbon atoms, or an optionally substituted heteroaryl group with 6-20 carbon atoms containing one or more heteroatoms selected from O, N and S,

X represents a single bond or an optionally substituted alkylene group with 3 or less carbon atoms,

A and B each independently represent an optionally substituted alkylene group with 1-5 carbon atoms,

m and n each independently represent an integer from 0 to 6, and

a and b each independently represent an integer from 0 to 10),

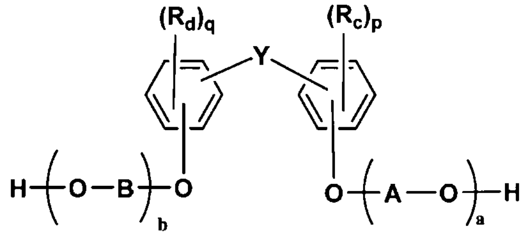

(2a)

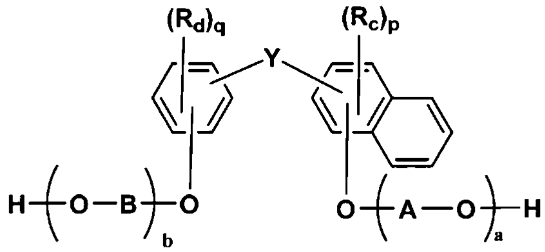

(2b)

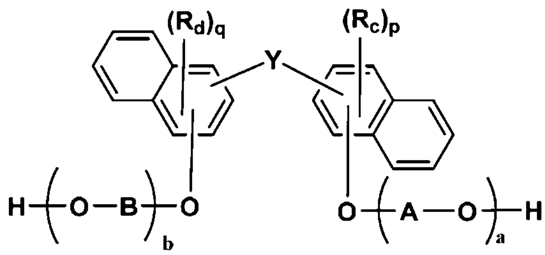

(2c)

(in general formulas (2a)-(2c),

$R_c$ and $R_d$ are each independently selected from the group consisting of a hydrogen atom, a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, and an optionally substituted aryl group with 6-20 carbon atoms,

Y each independently represents an optionally substituted fluorene group,
A and B each independently represent an optionally substituted alkylene group with 1-5 carbon atoms,
p and q each independently represent an integer from 0 to 4, and
a and b each independently represent an integer from 0 to 10).

[2] The thermoplastic resin composition according to [1] above, wherein the first thermoplastic resin and the second thermoplastic resin are both copolymers having the structural unit (A) and the structural unit (B).
[3] The thermoplastic resin composition according to [1] above, wherein the second thermoplastic resin has only the structural unit (B).
[4] The thermoplastic resin composition according to [1] above, wherein the content of the structural unit (A) is 30-65 mol% and the content of the structural unit (B) is 35-70 mol%, relative to the total number of structural units of the first thermoplastic resin and the second thermoplastic resin,
[5] The thermoplastic resin composition according to [1] above, wherein at least either one of the first thermoplastic resin and the second thermoplastic resin further comprises a structural unit (C) derived from a monomer represented by formula (3) below:

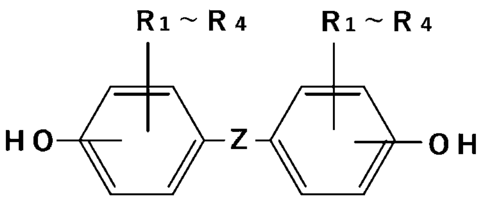

(3)

(in formula (3), $R_1$-$R_4$ are each independently a hydrogen atom, an alkyl group, or an aryl group, and
Z is a single bond or a group represented by general formula (4) below,

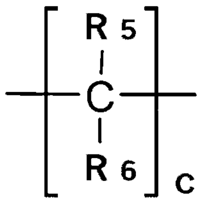

(4)

(in formula (4),
$R_5$ and $R_6$ are each a hydrogen atom, an alkyl group, or an aryl group, and
c represents an integer from 1 to 3).

[6] The thermoplastic resin composition according to [1] above, wherein the thermoplastic resin composition comprises two or more types of thermoplastic resins containing the structural unit (A).
[7] The thermoplastic resin composition according to [1] above, wherein the thermoplastic resin composition comprises two or more types of thermoplastic resins containing the structural unit (B).
[8] The thermoplastic resin composition according to [1] above, wherein the thermoplastic resin comprises a mold release agent and/or an antioxidant.
[9] The thermoplastic resin composition according to any one of [1]-[8] above, wherein the average value of in-plane birefringence in lens of the thermoplastic resin composition is 50 nm or less.
[10] The thermoplastic resin composition according to any one of [1]-[8] above, wherein the maximum value of in-plane birefringence in lens of the thermoplastic resin composition is 60 nm or less.
[11] An optical lens comprising the thermoplastic resin composition according to any one of [1]-[10] above.

ADVANTAGEOUS EFFECT OF THE INVENTION

According to the present invention, a thermoplastic resin composition comprising multiple predetermined types of thermoplastic resins as a mixture, which has good properties especially useful for optical applications, can be realized. The thermoplastic resin composition of the present invention has a high refractive index, low Abbe number, low in-plane birefringence, etc., as well as excellent moldability, thermal stability, etc. Furthermore, according to the present invention,

the thermoplastic resins can be easily reused in the formation of the thermoplastic resin composition, thereby facilitating recycling and reducing environmental load.

## DESCRIPTION OF EMBODIMENTS

### 1. Components of thermoplastic resin composition

### 1-1. Thermoplastic resin composition

A thermoplastic resin composition of the present invention comprises, as a mixture, at least a first thermoplastic resin containing a structural unit (A) derived from a monomer represented by general formula (1) above, and a second thermoplastic resin containing a structural unit (B) derived from a monomer represented by any of general formulas (2a)-(2c) above.

The structural unit (A) derived from a monomer represented by general formula (1) has a binaphthalene ring and is therefore hereinafter also referred to as a binaphthalene structural unit. Additionally, the structural unit (B) derived from a monomer represented by general formula (2) has a fluorene ring and is therefore hereinafter also referred to as a fluorene structural unit.

The details of the first and second thermoplastic resins will be described below.

In the thermoplastic resin composition, the content of the binaphthalene structural unit as the structural unit (A) is 5-95 mol% and the content of the fluorene structural unit as the structural unit (B) is 5-95 mol%, relative to the total number of structural units (i.e., total number of moles) of the first and second thermoplastic resins.

The content of the structural unit (A) is preferably 5-85 mol% or 10-80 mol%, more preferably 15-70 mol% or 20-65 mol%, still more preferably 30-70 mol%, 30-65 mol%, 35-70 mol% or 35-65 mol%, and particularly preferably 40-60 mol%, 40-55 mol%, 45-55 mol% or 45-50 mol%, relative to the total number of moles of the first and second thermoplastic resins.

Additionally, the content of the structural unit (A) is preferably 5-85 mol% or 10-80 mol%, more preferably 15-70 mol% or 20-65 mol%, still more preferably 30-70 mol%, 30-65 mol%, 35-70 mol% or 35-65 mol%, and particularly preferably 40-60 mol%, 40-55 mol%, 45-55 mol% or 45-50 mol%, relative to the total number of moles of the structural units of the thermoplastic resin composition.

The content of the structural unit (B) is preferably 10-90 mol% or 15-85 mol%, more preferably 20-75 mol% or 20-70 mol%, still more preferably 35-75 mol%, 35-70 mol%, 40-75 mol% or 40-70 mol%, and particularly preferably 45-65 mol%, 45-60 mol%, 50-60 mol% or 50-55 mol%, relative to the total number of moles of the first and second thermoplastic resins.

The content of the structural unit (B) is preferably 10-90 mol% or 15-85 mol%, more preferably 20-75 mol% or 20-70 mol%, still more preferably 35-75 mol%, 35-70 mol%, 40-75 mol% or 40-70 mol%, and particularly preferably 45-65 mol%, 45-60 mol%, 50-60 mol% or 50-55 mol%, relative to the total number of moles of the structural units of the thermoplastic resin composition.

In the thermoplastic resin composition, the content of the first thermoplastic resin containing the structural unit (A) is preferably 5-95 wt%, 5-85 wt% or 10-80 wt%, more preferably 15-70 wt% or 20-65 wt%, still more preferably 30-70 wt%, 30-65 wt%, 35-70 wt% or 35-65 wt%, and particularly preferably 40-60 wt%, 40-55 wt%, 45-55 wt% or 45-50 wt%, relative to the total weight of all thermoplastic resins.

Additionally, in the thermoplastic resin composition, the content of the second thermoplastic resin containing the structural unit (B) is preferably 5-95 wt%, 10-90 wt% or 15-85 wt%, more preferably 20-75 wt% or 20-70 wt%, still more preferably 35-75 wt%, 35-70 wt%, 40-75 wt% or 40-70 wt%, and particularly preferably 45-65 wt%, 45-60 wt%, 50-60 wt% or 50-55 wt%), relative to the total weight of all thermoplastic resins.

In the thermoplastic resin composition, the total content of the first thermoplastic resin containing the structural unit (A) and the second thermoplastic resin containing the structural unit (B) is preferably 40 wt% or more, more preferably 50 wt% or more or 60 wt% or more, still more preferably 70 wt% or more or 80 wt% or more, and particularly preferably 90 wt% or more or 95 wt% or more, relative to the total weight of all thermoplastic resins. It is also particularly preferred that all thermoplastic resins comprised in the thermoplastic resin composition are substantially the first thermoplastic resin or the second thermoplastic resin.

In the thermoplastic resin composition, the total content of the first thermoplastic resin containing the structural unit (A) and the second thermoplastic resin containing the structural unit (B) is preferably 40 wt% or more, more preferably 50 wt% or 60 wt% or more, still more preferably 70 wt% or 80 wt% or more, and particularly preferably 90 wt% or 95 wt% or more, relative to the total weight of the thermoplastic resin composition.

Thus, the thermoplastic resin composition may comprise components other than the first and second thermoplastic resins. For example, the thermoplastic resin composition may comprise a thermoplastic resin other than the first and second thermoplastic resins, additives, and the like, which will be described in detail below.

The type of thermoplastic resin comprised in the thermoplastic resin composition is not particularly limited, where a polycarbonate resin, a polyester resin, or a polyester carbonate resin is preferred, and a polycarbonate resin is more preferred. The thermoplastic resin comprised in the thermoplastic resin composition may have a structure of a random copolymer, a block copolymer, or an alternating copolymer, or may be a homopolymer.

1-2. First thermoplastic resin

The first thermoplastic resin contains at least a structural unit (A) derived from a monomer represented by general formula (1).

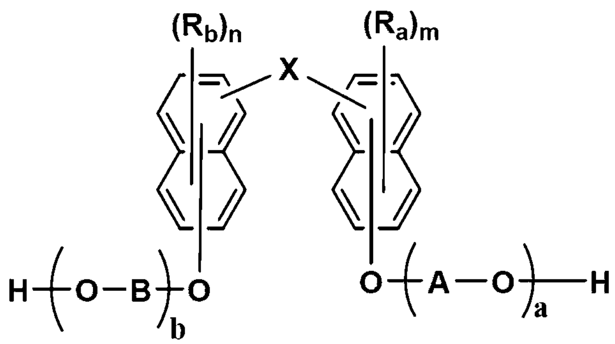

(1)

In general formula (1), $R_a$ and $R_b$ are each independently selected from the group consisting of a hydrogen atom, a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, an optionally substituted aryl group with 6-20 carbon atoms, an optionally substituted heteroaryl group with 6-20 carbon atoms containing one or more heteroatoms selected from O, N and S, an optionally substituted aryloxy group with 6-20 carbon atoms, and $-C{\equiv}C-R_h$.
$R_h$ above is an optionally substituted aryl group with 6-20 carbon atoms, or an optionally substituted heteroaryl group with 6-20 carbon atoms containing one or more heteroatoms selected from O, N and S.
$R_a$ and $R_b$ in general formula (1) are each preferably selected from a hydrogen atom, an optionally substituted alkyl group with 1-20 carbon atoms, an optionally substituted alkoxyl group with 1-20 carbon atoms, an optionally substituted cycloalkyl group with 5-20 carbon atoms, and an optionally substituted aryl group with 6-20 carbon atoms, and more preferably selected from a hydrogen atom, an optionally substituted alkyl group with 1-20 carbon atoms, and an optionally substituted aryl group with 6-20 carbon atoms. $R_a$ and $R_b$ are still more preferably selected from a hydrogen atom and an optionally substituted aryl group with 6-20 carbon atoms.
In general formula (1), X is a single bond or an optionally substituted alkylene group with 3 or less carbon atoms, preferably a single bond or an optionally substituted alkylene group with 2 or less carbon atoms, more preferably a single bond or an optionally substituted alkylene group with 1 carbon atom, and particularly preferably a single bond.
In general formula (1), A and B each independently represent an optionally substituted alkylene group with 1-5 carbon atoms, preferably an optionally substituted alkylene group with 1-3 carbon atoms, and more preferably an optionally substituted alkylene group with 1 or 2 carbon atoms.
In general formula (1), m and n are each independently an integer from 0 to 6, preferably an integer from 0 to 3, and more preferably 0 or 1.
In general formula (1), a and b are each independently an integer from 0 to 10, preferably an integer from 0 to 5, still more preferably an integer from 0 to 3, and particularly preferably 0 or 1.
Among the selections for $R_a$ and $R_b$ in general formula (1), the number of carbon atoms in each of the optionally substituted alkyl group with 2-20 carbon atoms and the optionally substituted alkoxyl group with 2-20 carbon atoms is preferably 1-10, more preferably 1-6, and still more preferably 1-3 or 1.
Among the selections for $R_a$ and $R_b$ in general formula (1), the number of carbon atoms in each of the optionally substituted cycloalkyl group with 5-20 carbon atoms and the optionally substituted cycloalkoxyl group with 5-20 carbon atoms is preferably 5-10, more preferably 6-8, and still more preferably 6 or 7.
Among the selections for $R_a$ and $R_b$ in general formula (1), the number of carbon atoms in each of the optionally substituted aryl group with 6-20 carbon atoms, the optionally substituted heteroaryl group with 6-20 carbon atoms containing one or more heteroatoms selected from O, N, and S, and the optionally substituted aryloxy group with 6-20 carbon atoms is preferably 6-12, more preferably 6-10, and still more preferably 6-8 or 6.
Examples of the above substituent that can be contained in the structural unit (A) of formula (1) above include a halogen atom, a hydroxy group, a carboxy group, a cyano group, an amide group with 1-10 carbon atoms, an alkyl group

with 1-10 carbon atoms, a cycloalkyl group with 5-10 carbon atoms, an alkoxy group with 1-10 carbon atoms, a cycloalkyloxy group with 5-10 carbon atoms, an alkyloxycarbonyl group with 2-10 carbon atoms, a cycloalkyloxycarbonyl group with 5-10 carbon atoms, an aryloxycarbonyl group with 7-15 carbon atoms, an alkylcarbonyloxy group with 2-10 carbon atoms, a cycloalkylcarbonyloxy group with 5-10 carbon atoms, an arylcarbonyloxy group with 7-15 carbon atoms, a hydroxyalkylcarbonyl group with 2-10 carbon atoms, and a glycidyloxycarbonyl group. The number of carbon atoms relating to general formula (1) also includes the number of carbon atoms in the substituent.

Preferred specific examples of a monomer forming the above structural unit (A) include 2,2'-bis(hydroxy(poly) alkoxy)-diaryl-1,1'-binaphthalenes and 2,2'-bis(hydroxy(poly)alkoxy)-dinaphthyl-1,1'-binaphthalenes. Among these monomer compounds, 2,2'-bis(2-hydroxyethoxy)-6,6'-diphenyl-1,1'-binaphthalene, 2,2'-bis(2-hydroxyethoxy)-6,6'-di(naphthalene-1-yl)-1,1'-binaphthalene, 2,2'-bis(2-hydroxymethoxy)-6,6'-diphenyl-1,1'-binaphthalene, 2,2'-bis(2-hydroxymethoxy)-6,6'-di(naphthalene-1-yl)-1,1'-binaphthalene, 2,2'-bis(2-hydroxypropoxy)-6,6'-diphenyl-1,1'-binaphthalene, and 2,2'-bis(2-hydroxypropoxy)-6,6'-di(naphthalene-1-yl)-1,1'-binaphthalene are preferred. The above monomer compounds may be used alone or in combination of two or more to form the structural unit (A).

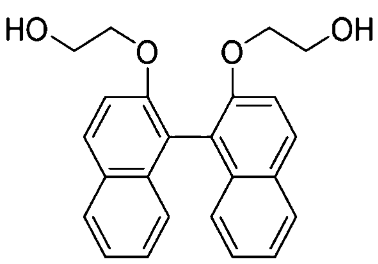

BNE

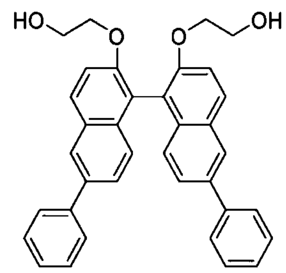

BINL-2EO or DPBHBNA

2,2'-Bis(2-hydroxyethoxy)- 2,2'-Bis(2-hydroxyethoxy)-6,6'-1,1-binaphthalene diphenyl-1,1'-binaphthalene

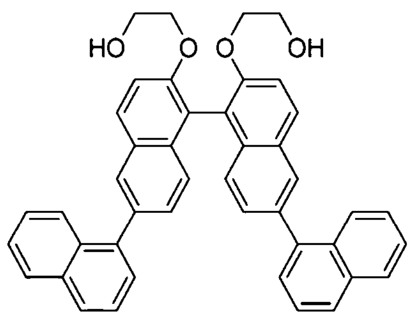

DNBINOL-2EO

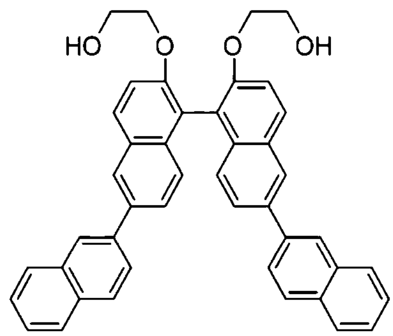

2DNBINOL-2EO

2,2'-Bis(2-hydroxyethoxy)-6,6'- 2,2'-Bis(2-hydroxyethoxy)-6,6'-di(naphthalene-1-yl)-1,1'-binaphthalene di(phenanthrene-9-yl)-1,1'-binaphthalene

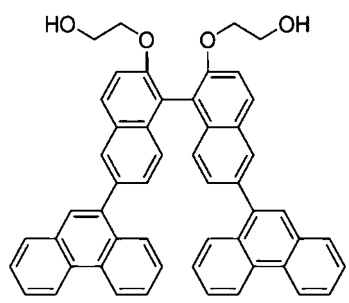

9DPNBINOL-2EO

2,2'-Bis(2-hydroxyethoxy)-6,6'-di(phenanthrene-9-yl)-1,1'-binaphthalene

The first thermoplastic resin is preferably a copolymer which has both the structural unit (A) described above and the structural unit (B) described in detail below. In the first thermoplastic resin, which is such a copolymer, the content of the

structural unit (A) is preferably 5-85 mol% or 10-80 mol%, more preferably 15-70 mol% or 20-65 mol%, still more preferably 30-70 mol%, 30-65 mol%, 35-70 mol% or 35-65 mol%, and particularly preferably 40-60 mol%, 40-55 mol%, 35-55 mol% or 45-50 mol%, relative to the total number of moles of the binaphthalene structural unit (A) and the fluorene structural unit (B).

In the first thermoplastic resin, the content of the structural unit (A) among all structural units is preferably 40 mol% or more, more preferably 50 mol% or 60 mol% or more, still more preferably 70 mol% or 80 mol% or more, and particularly preferably 90 mol% or 95 mol% or more.

While the first thermoplastic resin may also contain a structural unit other than the structural units (A) and (B), the content of the structural units (A) and (B) among all structural units is preferably 40 mol% or more, more preferably 50 mol% or 60 mol% or more, still more preferably 70 mol% or 80 mol% or more, and particularly preferably 90 mol% or 95 mol% or more.

The thermoplastic resin composition preferably comprises multiple thermoplastic resins containing the structural unit (A) described above, such as the first thermoplastic resin, as a mixture. A thermoplastic resin composition comprising the first thermoplastic resin and the second thermoplastic resin as a mixture, and more preferably comprising multiple types of thermoplastic resins containing the structural unit (A) as a mixture, is expected to have favorable properties as described below.

1-3. Second thermoplastic resin

The second thermoplastic resin contains at least a structural unit (B) derived from a monomer represented by any of general formulas (2a)-(2c).

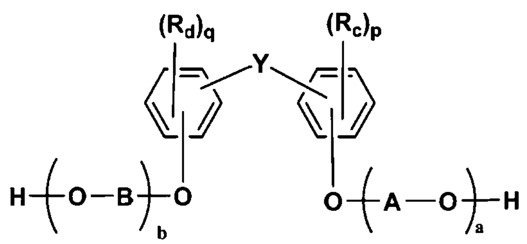

(2 a)

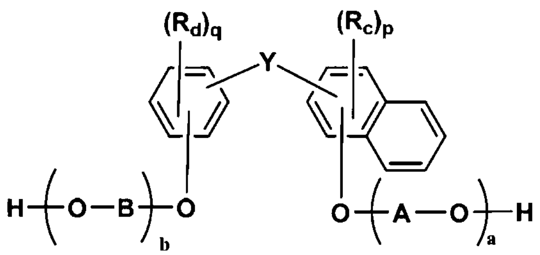

(2 b)

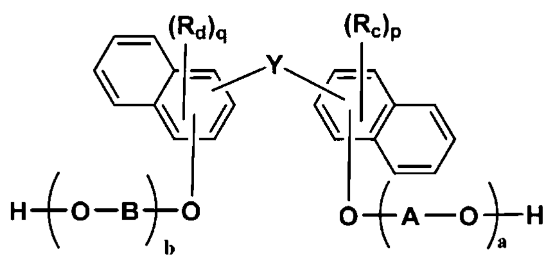

(2 c)

In general formulas (2a)-(2c), $R_c$ and $R_d$ are each independently selected from the group consisting of a hydrogen atom, a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, and an optionally substituted aryl group with 6-20 carbon atoms.

$R_c$ and $R_d$ in general formulas (2a)-(2c) are each independently preferably selected from a hydrogen atom, an optionally substituted alkyl group with 1-20 carbon atoms, an optionally substituted alkoxyl group with 1-20 carbon atoms, an optionally substituted cycloalkyl group with 5-20 carbon atoms, and an optionally substituted aryl group with 6-20 carbon atoms, and more preferably selected from a hydrogen atom, an optionally substituted alkyl group with 1-20 carbon

atoms, and an optionally substituted aryl group with 6-20 carbon atoms. $R_c$ and $R_d$ are still more preferably selected from a hydrogen atom and an optionally substituted aryl group with 6-20 carbon atoms.

In general formulas (2a)-(2c), Y are each independently an optionally substituted fluorene group.

In general formulas (2a)-(2c), A and B each independently represent an optionally substituted alkylene group with 1-5 carbon atoms, preferably an optionally substituted alkylene group with 1-3 carbon atoms, and more preferably an optionally substituted alkylene group with 1 or 2 carbon atoms.

In general formulas (2a)-(2c), p and q are each independently an integer from 0 to 4, preferably an integer from 0 to 3, and more preferably 0 or 1.

Additionally, in general formulas (2a)-(2c), a and b are each independently an integer from 0 to 10, preferably an integer from 0 to 5, still more preferably an integer from 0 to 3, and particularly preferably 0 or 1.

Among the selections for $R_c$ and $R_d$ in general formulas (2a)-(2c), the number of carbon atoms in each of the optionally substituted alkyl group with 1-20 carbon atoms and the optionally substituted alkoxyl group with 1-20 carbon atoms is preferably 1-10, more preferably 1-6, and still more preferably 1-3 or 1.

Among the selections for $R_c$ and $R_d$ in general formulas (2a)-(2c), the number of carbon atoms in each of the optionally substituted cycloalkyl group with 5-20 carbon atoms and the optionally substituted cycloalkoxyl group with 5-20 carbon atoms is preferably 5-10, more preferably 6-8, and still more preferably 6 or 7.

Among the selections for $R_c$ and $R_d$ in general formulas (2a)-(2c), the number of carbon atoms in the optionally substituted aryl group with 6-20 carbon atoms is preferably 6-12, more preferably 6-10, and still more preferably 6-8 or 6.

Examples of the above substituent that can be contained in the structural unit (B) of formulas (2a)-(2c) above include a halogen atom, a hydroxy group, a carboxy group, a cyano group, an amide group with 1-10 carbon atoms, an alkyl group with 1-10 carbon atoms, a cycloalkyl group with 5-10 carbon atoms, an alkoxy group with 1-10 carbon atoms, a cycloalkyloxy group with 5-10 carbon atoms, an alkyloxycarbonyl group with 2-10 carbon atoms, a cycloalkyloxycarbonyl group with 5-10 carbon atoms, an aryloxycarbonyl group with 7-15 carbon atoms, an alkylcarbonyloxy group with 2-10 carbon atoms, a cycloalkylcarbonyloxy group with 5-10 carbon atoms, an arylcarbonyloxy group with 7-15 carbon atoms, a hydroxyalkylcarbonyl group with 2-10 carbon atoms, and a glycidyloxycarbonyl group. The number of carbon atoms relating to general formulas (2a)-(2c) also includes the number of carbon atoms in the substituent.

Preferred specific examples of the monomer forming the aforementioned structural unit (B) include BNEF (9,9-bis(6-(2-hydroxyethoxy)naphthalene-2-yl)fluorene), BPEF (9,9-bis(4-(2-hydroxyethoxy)phenyl)fluorene), and BPPEF (9,9-bis(4-(2-hydroxyethoxy)-3-phenylphenyl)fluorene). The above monomer compounds may be used alone or in combination of two or more to form the structural unit (B).

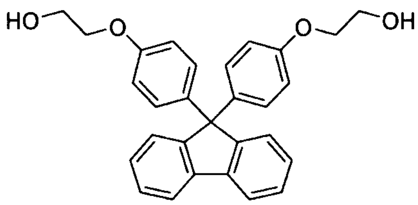

BPEF

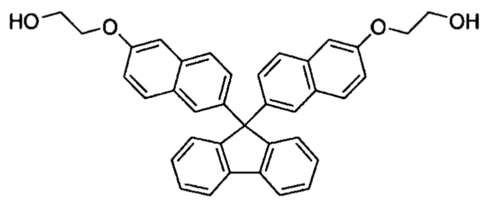

BNEF

9,9-Bis-(4-(2-hydroxyethoxy)phenyl) 9,9-Bis-(6-(2-hydroxyethoxy) fluorene naphthalene-2-yl)fluorene

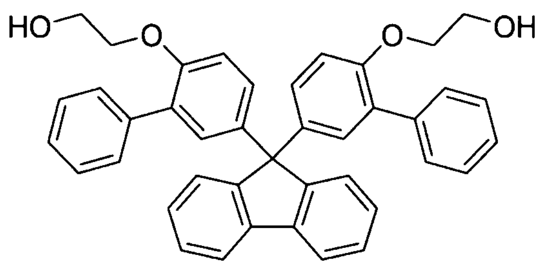

BPPEF

9,9-Bis-(4-(2-hydroxyethoxy)-3-phenylphenyl)fluorene

Additionally, the second thermoplastic resin is preferably a copolymer which has the structural unit (A) as well as the above-described structural unit (B). In the second thermoplastic resin, which is such a copolymer, the content of the structural unit (B) is preferably 5-90 mol%, 10-90 mol% or 15-85 mol%, more preferably 20-75 mol% or 20-70 mol%, still more preferably 35-75 mol%, 35-70 mol%, 40-75 mol% or 40-70 mol%, and particularly preferably 45-65 mol%, 45-60

mol%, 50-60 mol% or 50-55 mol%, relative to the total number of moles of the fluorene structural unit (B) and the binaphthalene structural unit (A).

In the second thermoplastic resin, the content of the structural unit (B) among all structural units is preferably 40 mol% or more, more preferably 50 mol% or 60 mol% or more, still more preferably 70 mol% or 80 mol% or more, and particularly preferably 90 mol% or 95 mol% or more.

In the thermoplastic resin composition, at least either one of the second and first thermoplastic resins is preferably a copolymer containing both the structural unit (A) and the structural unit (B). Furthermore, in the thermoplastic resin composition, both of the second and first thermoplastic resins may be copolymers containing both the structural unit (A) and the structural unit (B).

The thermoplastic resin composition preferably comprises multiple thermoplastic resins containing the structural unit (B) described above, such as the second thermoplastic resin, as a mixture. A thermoplastic resin composition comprising the second thermoplastic resin and the first thermoplastic resin as a mixture, more preferably comprising multiple types of thermoplastic resins containing the structural unit (B) as a mixture, is expected to have favorable properties as described below.

1-4. Other thermoplastic resin

The thermoplastic resin composition may comprise a thermoplastic resin (other thermoplastic resin) other than the first and second thermoplastic resins described above. For example, specific examples of other thermoplastic resin include a structural unit (C) derived from a monomer represented by formula (3) below.

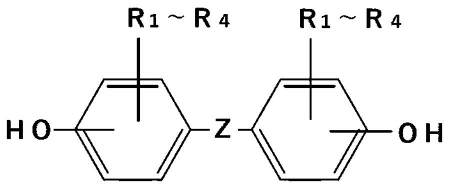

(3)

In formula (3), $R_1$-$R_4$ are each independently a hydrogen atom, an alkyl group, or an aryl group. $R_1$-$R_4$ are preferably selected from a hydrogen atom, an alkyl group with 1-10 carbon atoms, and an aryl group with 6-20 carbon atoms, more preferably selected from a hydrogen atom, an alkyl group with 1-6 carbon atoms, and an aryl group with 6-12 carbon atoms, and still more preferably selected from a hydrogen atom, an alkyl group with 1-3 carbon atoms, and an aryl group with 6-8 carbon atoms. $R_1$-$R_4$ may all be optionally substituted alkyl groups or optionally substituted aryl groups.

In formula (3), Z is a single bond or a group represented by general formula (4) below, preferably a group represented by general formula (4) below.

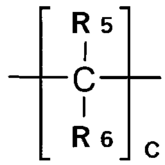

(4)

In formula (4), $R_5$ and $R_6$ are each a hydrogen atom, an alkyl group, or an aryl group. $R_5$-$R_6$ are each preferably selected from a hydrogen atom, an alkyl group with 1-10 carbon atoms, and an aryl group with 6-20 carbon atoms, more preferably selected from a hydrogen atom, an alkyl group with 1-6 carbon atoms, and an aryl group with 6-12 carbon atoms, and still more preferably selected from a hydrogen atom, an alkyl group with 1-3 carbon atoms, and an aryl group with 6-8 carbon atoms. $R_5$ and $R_6$ may both be optionally substituted alkyl groups or optionally substituted aryl groups.

The subscript c in formula (4), i.e., the lowercase letter c, which is not C that represents a carbon atom bonded to $R_5$ and $R_6$, represents an integer from 1 to 3. c is preferably 1 or 2, and more preferably 1.

Examples of the above substituent that can be contained in the structural unit (C) of formulas (3) and (4) above include a halogen atom, a hydroxy group, a carboxy group, a cyano group, an amide group with 1-10 carbon atoms, an alkyl group with 1-10 carbon atoms, a cycloalkyl group with 5-10 carbon atoms, an alkoxy group with 1-10 carbon atoms, a cycloalkyloxy group with 5-10 carbon atoms, an alkyloxycarbonyl group with 2-10 carbon atoms, a cycloalkyloxycarbonyl group with 5-10 carbon atoms, an aryloxycarbonyl group with 7-15 carbon atoms, an alkylcarbonyloxy group with 2-10 carbon atoms, a cycloalkylcarbonyloxy group with 5-10 carbon atoms, an arylcarbonyloxy group with 7-15 carbon atoms, a hydroxyalkylcarbonyl group with 2-10 carbon atoms, and a glycidyloxycarbonyl group. The number of carbon atoms

relating to general formulas (3) and (4) also includes the number of carbon atoms in the substituent.

1-5. Secondary components

The thermoplastic resin composition may comprise components other than thermoplastic resins. Examples include at least one additive selected from a mold release agent, an antioxidant, and the like. The thermoplastic resin composition preferably comprises either or both of a mold release agent and an antioxidant.

In the thermoplastic resin composition, the content of secondary components such as additives other than the thermoplastic resins is preferably 20 wt% or less, more preferably 15 wt% or less or 10 wt% or less, still more preferably 7 wt% or less or 5 wt% or less, and particularly preferably 3 wt% or less or 2 wt% or less.

Specific examples of additives comprised in the thermoplastic resin composition include the following.

Mold release agent

Examples of the mold release agent include carboxylic acid esters, polysiloxane compounds, and paraffin wax (polyolefin-based) mold release agents. Specifically, examples include at least one compound selected from the group consisting of aliphatic carboxylic acids, esters of aliphatic carboxylic acids and alcohols, aliphatic hydrocarbon compounds with a number average molecular weight of 200-15,000, and polysiloxane-based silicone oils. Examples of aliphatic carboxylic acids include saturated or unsaturated aliphatic monovalent, divalent or trivalent carboxylic acids. Here, aliphatic carboxylic acids also include alicyclic carboxylic acids. Among these, aliphatic carboxylic acids are preferably monovalent or divalent carboxylic acids with 6-36 carbon atoms, and more preferably saturated aliphatic monovalent carboxylic acids with 6-36 carbon atoms. Specific examples of the aliphatic carboxylic acid include palmitic acid, stearic acid, valeric acid, caproic acid, capric acid, lauric acid, arachidic acid, behenic acid, lignoceric acid, cerotic acid, melissic acid, tetratriacontanoic acid, montanic acid, glutaric acid, adipic acid, and azelaic acid. The same aliphatic carboxylic acid as those mentioned above can also be used as the aliphatic carboxylic acid in the ester of an aliphatic carboxylic acid and an alcohol. Meanwhile, examples of the alcohol include saturated or unsaturated monohydric or polyhydric alcohols. These alcohols may have a substituent such as a fluorine atom or an aryl group. Among these, saturated monohydric or polyhydric alcohols with 30 or less carbon atoms are preferred, and saturated aliphatic monohydric or polyhydric alcohols with 30 or less carbon atoms are more preferred. Here, aliphatic compounds also includes alicyclic compounds. Specific examples of the alcohol include octanol, decanol, dodecanol, stearyl alcohol, behenyl alcohol, ethylene glycol, diethylene glycol, glycerol, pentaerythritol, 2,2-dihydroxyperfluoropropanol, neopentylene glycol, ditrimethylolpropane, and dipentaerythritol.

The ester compound described above may contain an aliphatic carboxylic acid and/or an alcohol as impurities and may be a mixture of multiple compounds. Specific examples of the ester of an aliphatic carboxylic acid and an alcohol include beeswax (a mixture consisting mainly of myristyl palmitate), stearyl stearate, behenyl behenate, stearyl behenate, glycerol monopalmitate, glycerol monostearate, glycerol distearate, glycerol tristearate, pentaerythritol monopalmitate, pentaerythritol monostearate, pentaerythritol distearate, pentaerythritol tristearate, and pentaerythritol tetrastearate. Examples of the aliphatic hydrocarbon with a number average molecular weight of 200-15,000 include liquid paraffin, paraffin wax, microcrystalline wax, polyethylene wax, Fischer-Tropsch wax, and an $\alpha$-olefin oligomer with 3-12 carbon atoms. Here, aliphatic hydrocarbons also include alicyclic hydrocarbons. These hydrocarbon compounds may also be partially oxidized. Among these, paraffin wax, polyethylene wax or a partial oxide of polyethylene wax is preferred, and paraffin wax or polyethylene wax is more preferred. The number average molecular weight is preferably 200-5,000. These aliphatic hydrocarbons may be a single substance or a mixture of various components and molecular weights, as long as the main component is within the above range. Examples of the polysiloxane-based silicone oil include dimethyl silicone oil, phenyl methyl silicone oil, diphenyl silicone oil, and fluorinated alkyl silicone. Two or more of these may be used in combination.

The proportion of the mold release agent added is preferably 0.001 parts by mass or more, more preferably 0.01 parts by mass or more, and preferably 2 parts by mass or less, more preferably 1 part by mass or less, relative to 100 parts by mass of the thermoplastic resin material.

Only one type or two or more types of mold release agents may be used. When two or more types are used, the total amount of them is preferably within the above range.

Antioxidant

Examples of the antioxidant include a phenolic antioxidant, a hindered phenolic antioxidant, a bisphenol-based antioxidant, and a polyphenolic antioxidant.

Specifically, examples include 2,6-di-tert-butyl-4-methylphenol, tris(3,5-di-tert-butyl-4-hydroxybenzyl)isocyanurate, n-octadecyl-3-(3',5'-di-tert-butyl-4'-hydroxyphenyl)propionate, tetrakis[methylene-3-(3,5-di-tert-butyl-4-hydroxyphenyl)propionate] methane, 4,4'-butylidenebis-(3-methyl-6-tert-butylphenol), triethylene glycol-bis[3-(3-tert-butyl-4-hydroxy-5-methylphenyl)propionate], 3,9-bis{2-[3-(3-tert-butyl-4-hydroxy-5-methylphenyl)propionyloxy]-1,1-dimethylethyl}-2,4,8,10-tetraoxaspiro[5,5]undecane, pentaerythritol tetrakis[3-(3,5-di-tert-butyl-4-hydroxyphenyl)propionate], thiodiethylenebis[3-(3,5-di-tert-butyl-4-hydroxyphenyl)propionate], N,N'-hexane-1,6-diylbis[3-(3,5-di-tert-butyl-4-hydroxyphenylpropionamide)], 2,4-dimethyl-6-(1-methylpentadecyl)phenol, diethyl[[3,5-bis(1,1- dimethylethyl)-4-hydroxyphenyl]methyl]phosphoate, 3,3',3",5,5',5"-hexa-tert-butyl-a,a',a"-(mesitylene-2,4,6-triyl)tri-p-cresol, 4,6-bis(octylthiomethyl)-o-cresol, ethylene bis(oxyethylene)bis[3-(5-tert-butyl-4-hydroxy-m-tolyl)propionate], hexamethylenebis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazine-2-ylamino)phenol.

Examples of the phenolic antioxidant include "Irganox 1010 (registered trademark, hereinafter the same)" and "Irganox 1076" from BASF, and "ADK STAB AO-50" and "ADK STAB AO-60" from ADEKA Corporation.

The proportion of the antioxidant added is preferably 0.001 parts by mass or more, more preferably 0.01 parts by mass or more, and preferably 1 part by mass or less, more preferably 0.5 parts by mass or less, relative to 100 parts by mass of the thermoplastic resin material. Only one type of antioxidant may be contained, or two or more types may be contained. When two or more types are contained, the total amount of them is preferably within the above range.

2. Method for producing thermoplastic resin composition

Hereinafter, a method for producing a thermoplastic resin composition will be described. Thermoplastic resins, such as the first and second thermoplastic resins, can be produced by known methods. For example, a thermoplastic resin can be produced by proceeding a polymerization reaction in a reaction system containing a monomer compound and a catalyst under the conditions of a polymerization temperature of 200-250°C and a pressure of 760 mmHg-200 mmHg. For example, a thermoplastic resin, which is a polycarbonate resin, can be produced by melt polycondensation using monomer compounds represented by general formulas (1)-(3) above and a carbonate precursor, such as a carbonic acid diester, as raw materials in the presence or absence of a basic compound catalyst, a transesterification catalyst, or a mixed catalyst of both.

A thermoplastic resin composition can be produced by melt kneading multiple types of thermoplastic resins obtained by the polymerization reaction, secondary components mentioned above, etc., or by dissolving each of them in a solvent, blending them, and then volatilizing the solvent. For the intended solvent, a halogenated organic solvent, THF, or the like can suitably be used.

3. Properties of thermoplastic resin composition and thermoplastic resins

Preferred properties of the thermoplastic resin composition and thermoplastic resins are as follows.

3-1. Total transmittance (TT (%))

The total transmittance (%) of the thermoplastic resin composition according to JIS K 7361-1: 1997 is preferably 60% or more, more preferably 70% or more, still more preferably 80% or more, and particularly preferably 85% or more, as measured by the method described below.

3-2. YI value

The YI value of the thermoplastic resin composition according to JIS K 7373: 2006 is preferably 20 or less, more preferably 16 or less, still more preferably 14 or less, and particularly preferably 13.5 or less, as measured by the method described below.

3-3. Haze

The haze value of the thermoplastic resin composition according to JIS K-7136: 2000 is preferably 2.0 or less, more preferably 1.0 or less, still more preferably 0.8 or less, and particularly preferably 0.6 or less, as measured by the method described below.

3-4. Refractive index

The refractive index value (nD) of the thermoplastic resin composition according to JIS B 7071-2: 2018 is preferably 1.630 or more, more preferably 1.640 or more, still more preferably 1.650 or more, and particularly preferably 1.660 or more or 1.670 or more.

3-5. Abbe number (vd)

The value of Abbe number (vd) of the thermoplastic resin composition is preferably 24 or less, more preferably 22 or less, still more preferably 21 or less, and particularly preferably 20 or less or 19 or less, as measured by the method described below.

3-6. Melt volume rate (MVR)

The MVR value (unit: $cm^3$/10 min) of the thermoplastic resin composition according to JIS K7210 is preferably 30 or more, more preferably 40 or more, still more preferably 45 or more or 50 or more, and particularly preferably 55 or more or 65 or more.

A resin or resin composition with a large MVR value can be said to have high flowability. As will be described below, between thermoplastic resins in the form of a mixture and thermoplastic resins in the form of a copolymer, which substantially share the same types and contents of structural units, it was confirmed that the MVR value of the thermoplastic resins in the form of a mixture tended to be higher than that of the other.

Thus, it can be said that a thermoplastic resin composition of the present invention, which comprises a mixture of thermoplastic resins, has good flowability and moldability.

3-7. In-plane birefringence (average and maximum values)

The average value of in-plane birefringence of the thermoplastic resin composition, as measured by the method described below, is preferably 50 nm or less or 40 nm or less, more preferably 30 nm or less, still more preferably 15 nm or less, and particularly preferably 13 nm or less or 11 nm or less.

Additionally, the maximum value of in-plane birefringence of the thermoplastic resin composition, as measured by the method described below, is preferably 90 nm or less or 80 nm or less, more preferably 70 nm or less or 60 nm or less, still more preferably 50 nm or less or 35 nm or less, and particularly preferably 30 nm or less or 20 nm or less.

As can be appreciated from the results for the examples and comparative examples described below, between the thermoplastic resins in the form of a mixture and the thermoplastic resins in the form of a copolymer, which substantially share the same types and contents of structural units, it was confirmed that the in-plane birefringence value (mm) of the thermoplastic resins in the form of a mixture tended to be higher than that of the other. Thus, it can be said that a thermoplastic resin composition of the present invention, which comprises a mixture of thermoplastic resins, has excellent birefringence.

3-8. Weight average molecular weight

The weight average molecular weight of the thermoplastic resin comprised in the thermoplastic resin composition is preferably 10,000-300,000, more preferably 10,000-200,000, and still more preferably 10,000-100,000. For example, it is more preferably 20,000-80,000, still more preferably 30,000-70,000, and particularly preferably 40,000-65,000.

The weight average molecular weight of a thermoplastic resin is measured, for example, as follows as a polystyrene-equivalent weight average molecular weight (Mw).

GPC (gel permeation chromatography) is used to generate a calibration curve using standard polystyrenes (Shodex STANDARD, SM-105) of known molecular weights (molecular weight distribution = 1) and chloroform as the eluent. The elution time and molecular weight value of each peak were plotted from the measured standard polystyrene and approximated by cubic equation to generate a calibration curve.

Then, based on the obtained calibration curve, the weight average molecular weight (Mw) can be determined as a polystyrene-equivalent value from the following formula.

[Formula]

$$Mw = \Sigma(W_i \times M_i)/\Sigma(W_i)$$

(In the above formula, i represents the i-th fraction when the molecular weight M is fractionated, Wi is the i-th weight, and Mi is the i-th molecular weight. The molecular weight M represents the molecular weight in terms of polystyrene equivalent at the same elution time on the calibration curve).

3-9. Glass transition temperature (Tg)

The value of glass transition temperature (Tg) of the thermoplastic resin composition according to JIS K7121-1987 is preferably 100-200°C, more preferably 110-180°C, still more preferably 120-160°C, and particularly preferably 130-150°C.

4. Molded body containing thermoplastic resin composition

The thermoplastic resin composition of the present invention can be used for extrusion molding, blow molding, injection molding, and the like. Molded bodies as products (molded articles) obtained using the thermoplastic resin composition include extruded articles, hollow molded articles, injection molded products such as precision parts and thin objects, and the like.

Specific examples of molded articles using the thermoplastic resin of the present invention as an optical material include optical components such as optical lenses, optical films, various films for liquid crystal displays, light guide plates, optical disc substrates, etc., and housings for electronic devices such as smartphones.

Hereinafter, the present invention will be described specifically by way of examples, although the present invention should not be limited to these examples.

EXAMPLES

Methods for measuring various properties of the thermoplastic resins or thermoplastic resin compositions obtained in the examples and comparative examples described below are as follows.

(1) In-plane birefringence in lens (average value)

-Molding of specimens

The obtained resin or resin composition was injection molded to obtain a concave lens specimen with a diameter of 4.5 mm and a center thickness of 0.2 mm.

Molding equipment: SUMITOMO SHI DEMAG SE50EV
Molding conditions: Cylinder temperature 260°C, mold temperature: glass transition temperature (Tg) -15°C, injection rate 30 mm/s, VP pressure 65 MPa (position 2.3 mm), holding pressure 65 MPa for 1 second + 55 MPa for 1.5 seconds

-Measurement of in-plane birefringence in lens

Retardation of the concave lens specimen obtained by the above method was measured.
Measurement instrument: WPA-100 from Photonic Lattice Inc.
Data processing method: Software "PA/WPA View" from Photonic Lattice Inc. was used to determine average retardation as the in-plane birefringence in lens (average value).

(2) In-plane birefringence in lens (maximum value)

Retardation values of the specimens were measured in the same manner as described in (1) above, and the maximum value of the obtained measured values was used as the in-plane birefringence in lens (maximum value).

(3) Total transmittance (TT), YI, and haze

The resulting resin was molded into a thickness of 3 mm to measure the total transmittance (TT), YI, and haze using a spectroscopic haze meter. Total transmittance (TT), YI value, and haze were values obtained in accordance with JIS K 7361-1: 1997, JIS K 7373: 2006, and JIS K-7136: 2000, respectively.

Measurement instrument: "SH 7000" from Nippon Denshoku Industries Co., Ltd.

(4) Refractive index (nD)

In accordance with JIS B 7071-2: 2018, the obtained resin or resin composition was molded to obtain a V-block of

a predetermined shape for use as a specimen. Refractive index was measured at 23°C using a refractometer (KPR-3000 from Shimadzu Corporation).

(5) Abbe number (vd)

Using a specimen (V-block) similar to the one used for the refractive index measurement, the refractive indices were measured at wavelengths of 486 nm, 589 nm, and 656 nm and 23°C using a refractometer to calculate the Abbe number according to the following formula.

Refractometer: KPR-3000 from Shimadzu Corporation

$$\nu = (nD - 1)/(nF - nC)$$

nD: Refractive index at wavelength of 589 nm
nC: Refractive index at wavelength of 656 nm
nF: Refractive index at wavelength of 486 nm
Refractometer: KPR-3000 from Shimadzu Corporation

(6) Glass transition temperature (Tg)

Glass transition temperature was measured in accordance with JIS K7121-1987, using a differential thermal scanning calorimeter with a temperature increase program of 10°C/min.

Differential thermal scanning calorimeter: X-DSC7000 from Hitachi High-Tech Science Corporation

(7) Melt volume rate (MVR)

The obtained resin or resin composition was vacuum dried at 120°C for 4 hours to measure the melt volume rate in accordance with JIS K7210.

Measurement instrument: Melt Indexer T-111 from Toyo Seiki Seisaku-sho, Ltd.

Measurement conditions: Measurement was performed at a temperature of 260°C and a load of 2,160 g.

Operation: MVR (unit: $cm^3$/10 min) was calculated from the amount of resin extruded per 10 minutes from a standard die provided at the bottom of the cylinder.

MVR is an index of flowability of the resin, where the higher the value, the higher the flowability of the resin or resin composition.

(Polymerization example 1)

7.67 kg (20.48 mol) of 2,2'-bis(2-hydroxyethoxy)-1,1'-binaphthalene (BNE), 14.80 kg (25.05 mol) of 9,9-bis(4-(2-hydroxyethoxy)-3-phenylphenyl)fluorene (BPPEF), 10.28 kg (48.00 mol) of DPC, and $2.41 \times 10^{-2}$ g ($2.86 \times 10^{-4}$ mol) of sodium bicarbonate were placed in a 50-liter reactor equipped with a stirrer and a distillation unit. After nitrogen replacement in the reaction system, the temperature in the reaction system was increased to 205°C over 20 minutes in a nitrogen atmosphere at 760 Torr. The raw materials were then melted while the pressure was reduced to 700 Torr over 10 minutes. The resultant was held for 10 minutes, then stirred, held for another 100 minutes, and then the pressure in the reaction system was reduced to 205 Torr over 20 minutes. The resultant was held for 60 minutes, then the pressure in the reaction system was adjusted to 180 Torr over 10 minutes, and held under the conditions of 215°C and 180 Torr for 20 minutes. The pressure in the reaction system was adjusted to 150 Torr over another 10 minutes, held under the conditions of 230°C and 150 Torr for 30 minutes, then the pressure was reduced to 120 Torr and the temperature was increased to 235°C. The pressure in the reaction system was then reduced to 100 Torr over 10 minutes and held for 10 minutes. The pressure in the reaction system was reduced to 1 Torr or less over another 50 minutes, and held under the conditions of 235°C and 1 Torr or less for 40 minutes. After the reaction was complete, nitrogen was blown into the reactor to apply pressure to remove the generated polycarbonate resin while pelletizing.

With respect to 100 parts by weight of the removed polycarbonate resin pellets, 0.2 parts by weight of glycerol monostearate (RIKEMAL S-100A from Riken Vitamin Co., Ltd.), 0.1 parts by weight of pentaerythritol tetrakis[3-(3,5-di-tert-butyl-4-hydroxyphenyl)propionate] (ADK STAB AO-60 from ADEKA Corporation), and 0.03 parts by weight of 3,9-bis(2,6-di-tert-butyl-4-methylphenoxy)-2,4,8,10-tetraoxa-3,9-diphosphaspiro[5.5]undecane (ADK STAB PEP-36 from ADEKA Corporation) were compounded as additives in a vented twin-screw extruder (TEM-26SX from Shibaura Machine Co. Ltd.; co-directional rotation) to obtain a polycarbonate resin mixed with the additives.

Extrusion conditions were as follows: a discharge rate of 15 kg/h, a screw speed of 300 rpm, a vacuum degree of

vent of 3 kPa, and extrusion temperatures of 200°C, 220°C, 240°C, 260°C, 260°C, 260°C, 260°C, 260°C, 255°C, and 255°C, in this order, from the first feed port to the die section.

(Collection of waste resin 1)

An optical lens was molded using the polycarbonate resin obtained in Polymerization example 1, and a to-be-recycled product (To-be-recycled product 1) containing the spool and runner of the resulting molded article was collected.

(Polymerization example 2)

As raw materials, 5.56 kg (10.32 mol) of BNEF, 7.45 kg (19.90 mol) of BNE, 4.76 kg (8.06 mol) of BPPEF, 8.449 kg (39.44 mol) of DPC, and 0.034 g ($4.0 \times 10^{-4}$ mol) of sodium bicarbonate were placed in a 50 L reactor equipped with a stirrer and a distillation unit. After nitrogen replacement in the reaction system, the reactor was heated to 180°C in a nitrogen atmosphere at 760 mmHg. After 30 minutes from the start of heating, complete dissolution of the raw materials was confirmed, and then the mixture was stirred for 120 minutes under the same conditions. The degree of pressure reduction in the reaction system was then adjusted to 200 mmHg, and at the same time, the temperature was increased to 200°C at a rate of 60°C/hr. At this point, the start of distillation of the by-produced phenol was confirmed. Thereafter, the temperature in the reaction system was held at 200°C for 40 minutes to allow the reaction to take place. The temperature was further increased to 230°C at a rate of 75°C/hr, and after 10 minutes from the end of the temperature increase, the degree of pressure reduction was made to 1 mmHg or less over 2 hours while maintaining this temperature. The temperature in the reaction system was then increased to 245°C at a rate of 60°C/hr and stirring was performed for another 50 minutes. After the reaction was completed, nitrogen was introduced into the reactor to return the pressure to normal to remove the generated resin while pelletizing.

The removed polycarbonate resin was mixed with additives in the same manner as in Polymerization example 1 to obtain a polycarbonate resin.

(Collection of waste resin 2)

From the polycarbonate resin obtained in Polymerization example 2, a to-be-recycled product (To-be-recycled product 2) containing the spool and runner was collected in the same manner as in (Collection of waste resin 1) described above.

(Example 1)

100 parts by weight of a thermoplastic resin composed of 85 wt% To-be-recycled product 1 described above and 15 wt% To-be-recycled product 2 described above as well as 0.2 parts by weight of glycerol monostearate (RIKEMAL S-100A from Riken Vitamin Co., Ltd.) and 0.1 parts by weight of pentaerythritol tetrakis[3-(3,5-di-tert-butyl-4-hydroxyphenyl)propionate] (ADK STAB AO-60 from ADEKA Corporation) as additives were melt-mixed in an extruder to obtain a resin composition. The extruder used for melt-mixing was a vented twin-screw extruder (TEM-26SX from Shibaura Machine Co. Ltd.; co-directional rotation) and extrusion conditions were as follows: a discharge rate of 15 kg/h, a screw speed of 300 rpm, a vacuum degree of vent of 3 kPa, and extrusion temperatures of 200°C, 220°C, 240°C, 260°C, 260°C, 260°C, 260°C, 260°C, 255°C, and 255°C, in this order, from the first feed port to the die section.

The physical properties of the obtained composition are shown in Table 1 below.

(Examples 2-3, Comparative examples 1 and 2)

Resin compositions were obtained in the same manner as in Example 1, except that melt-mixing was performed in the proportions shown in Table 1.

The physical properties of the obtained compositions are shown in Table 1 below.

[Table 1]

| | | Example 1 | Example 2 | Example 3 | Comparative example 1 (To-be-recycled product 1) | Comparative example 2 (To-be-recycled product 2) | Polymerization example (Resin of Comparative example 1 immediately after polymerization) | Polymerization example 2 (Resin of Comparative example 2 immediately after polymerization) |
|---|---|---|---|---|---|---|---|---|
| Mixing ratio | Resin obtained in Polymerization example 1 (wt%) | 85 | 80 | 75 | 100 | 0 | 100 | 0 |
| | Resin obtained in Polymerization example 2 (wt%) | 15 | 20 | 25 | 0 | 100 | 0 | 100 |
| Composition ratio | BNE (mol%) | 46.1 | 46.4 | 46.8 | 45.0 | 52.0 | 45.0 | 52.0 |
| | BPPEF (mol%) | 49.9 | 48.2 | 46.5 | 55.0 | 21.0 | 55.0 | 21.0 |
| | BNEF (mol%) | 4.1 | 5.4 | 6.8 | 0.0 | 27.0 | 0.0 | 27.0 |
| | Structural unit (A) (mol%) | 46.1 | 46.4 | 46.8 | 45.0 | 52.0 | 45.0 | 52.0 |
| | Structural unit (B) (mol%) | 54.0 | 53.6 | 53.3 | 55.0 | 48.0 | 55.0 | 48.0 |
| Physical properties | Total transmittance (TT) (%) | 86.5 | 86.5 | 86.4 | 86.6 | 85.6 | 87.3 | 86.8 |
| | YI | 11.7 | 11.8 | 12.0 | 11.2 | 14.3 | 7.6 | 7.9 |
| | Haze | 0.5 | 0.5 | 0.5 | 0.5 | 0.6 | 0.3 | 0.3 |
| | Refractive index (nD) | 1.662 | 1.662 | 1.663 | 1.661 | 1.669 | 1.661 | 1.669 |
| | Abbe (vd) | 20.3 | 20.2 | 20.2 | 20.4 | 19.4 | 20.4 | 19.5 |
| | Glass transition temperature (Tg) | 138 | 137 | 138 | 137 | 141 | 138 | 140 |
| | Melt volume rate (MVR) | 62 | 65 | 65 | 64 | 54 | 58 | 51 |

(continued)

| | | Example 1 | Example 2 | Example 3 | Comparative example 1 | Comparative example 2 | Polymerization example | Polymerization example 2 |
|---|---|---|---|---|---|---|---|---|
| | | | | | (To-be-recycled product 1) | (To-be-recycled product 2) | (Resin of Comparative example 1 immediately after polymerization) | (Resin of Comparative example 2 immediately after polymerization) |
| | Average in-plane birefringence in lens (nm) | 13 | 11 | 10 | 19 | 30 | 21 | 24 |
| | Maximum in-plane birefringence in lens (nm) | 34 | 26 | 26 | 62 | 63 | 66 | 105 |

(Polymerization example 3)

20.43 kg (46.00 mol) of 9,9-bis[4-(2-hydroxyethoxy)phenyl)fluorene (BPEF), 10.28 kg (48.00 mol) of DPC, and $2.41 \times 10^{-2}$ g ($2.86 \times 10^{-4}$ mol) of sodium bicarbonate were placed in a 50-liter reactor equipped with a stirrer and a distillation unit. After nitrogen replacement in the reaction system, the temperature in the reaction system was increased to 205°C over 20 minutes in a nitrogen atmosphere at 760 Torr. The raw materials were then melted while the pressure was reduced to 700 Torr over 10 minutes. The resultant was held for 10 minutes, then stirred, held for another 100 minutes, and then the pressure was reduced to 205 Torr over 20 minutes. Then, the pressure in the reaction system was adjusted to 180 Torr over 10 minutes, and held under the conditions of 215°C and 180 Torr for 20 minutes. The pressure in the reaction system was adjusted to 150 Torr over another 10 minutes, held under the conditions of 230°C and 150 Torr for 30 minutes, then the pressure was reduced to 120 Torr and the temperature was increased to 235°C. The pressure in the reaction system was then reduced to 100 Torr over 10 minutes and held for 10 minutes. The pressure in the reaction system was reduced to 1 Torr or less over another 50 minutes, and held under the conditions of 235°C and 1 Torr or less for 40 minutes. After the reaction was complete, nitrogen was blown into the reactor to apply pressure to remove the generated polycarbonate resin while pelletizing.

With respect to 100 parts by weight of the removed polycarbonate resin pellets, 0.2 parts by weight of glycerol monostearate (RIKEMAL S-100A from Riken Vitamin Co., Ltd.) and 0.1 parts by weight of pentaerythritol tetrakis[3-(3,5-di-tert-butyl-4-hydroxyphenyl)propionate] (ADK STAB AO-60 from ADEKA Corporation) were compounded as additives in a vented twin-screw extruder (TEM-26SX from Shibaura Machine Co. Ltd.; co-directional rotation) to obtain a polycarbonate resin mixed with the additives.

Extrusion conditions were as follows: a discharge rate of 15 kg/h, a screw speed of 300 rpm, a vacuum degree of vent of 3 kPa, and extrusion temperatures of 200°C, 220°C, 240°C, 260°C, 260°C, 260°C, 260°C, 260°C, 255°C, and 255°C, in this order, from the first feed port to the die section.

(Collection of waste resin 3)

An optical lens was molded using the polycarbonate resin obtained in Polymerization example 3, and a to-be-recycled product (To-be-recycled product 3) containing the spool and runner of the resulting molded article was collected.

(Polymerization example 4)

7.84 kg (20.96 mol) of 2,2'-bis(2-hydroxyethoxy)-1,1'-binaphthalene (BNE), 10.03 kg (18.63 mol) of 9,9-bis[6-(2-hydroxyethoxy)-2-naphthyl]fluorene (BNEF), 3.68 kg (6.99 mol) of DPBHBNA, 10.28 kg (48.00 mol) of DPC, and $2.41 \times 10^{-2}$ g ($2.86 \times 10^{-4}$ mol) of sodium bicarbonate were placed in a 50-liter reactor equipped with a stirrer and a distillation unit. After nitrogen replacement in the reaction system, the temperature in the reaction system was increased to 205°C over 20 minutes in a nitrogen atmosphere at 760 Torr. The raw materials were then melted while the pressure was reduced to 700 Torr over 10 minutes. The resultant was held for 10 minutes, then stirred, held for another 100 minutes, and then the pressure in the reaction system was reduced to 205 Torr over 20 minutes. The resultant was held for 60 minutes, then the pressure in the reaction system was adjusted to 180 Torr over 10 minutes, and held under the conditions of 215°C and 180 Torr for 20 minutes. The pressure in the reaction system was adjusted to 150 Torr over another 10 minutes, held under the conditions of 230°C and 150 Torr for 30 minutes, then the pressure was reduced to 120 Torr and the temperature was increased to 235°C. The pressure in the reaction system was then reduced to 100 Torr over 10 minutes and held for 10 minutes. The pressure in the reaction system was reduced to 1 Torr or less over another 50 minutes, and held under the conditions of 235°C and 1 Torr or less for 40 minutes. After the reaction was complete, nitrogen was blown into the reactor to apply pressure to remove the generated polycarbonate resin while pelletizing.

With respect to 100 parts by weight of the removed polycarbonate resin pellets, 0.2 parts by weight of glycerol monostearate (RIKEMAL S-100A from Riken Vitamin Co., Ltd.), 0.1 parts by weight of pentaerythritol tetrakis[3-(3,5-di-tert-butyl-4-hydroxyphenyl)propionate] (ADK STAB AO-60 from ADEKA Corporation), 0.03 parts by weight of 3,9-bis(2,6-di-tert-butyl-4-methylphenoxy)-2,4,8,10-tetraoxa-3,9-diphosphaspiro[5.5]undecane (ADK STAB PEP-36 from ADEKA Corporation) were compounded as additives in a vented twin-screw extruder (TEM-26SX from Shibaura Machine Co. Ltd.; co-directional rotation) to obtain a polycarbonate resin mixed with the additives.

Extrusion conditions were as follows: a discharge rate of 15 kg/h, a screw speed of 300 rpm, a vacuum degree of vent of 3 kPa, and extrusion temperatures of 200°C, 220°C, 240°C, 260°C, 260°C, 260°C, 260°C, 260°C, 255°C, and 255°C, in this order, from the first feed port to the die section.

(Example 4)

100 parts by weight of a thermoplastic resin composed of 90 wt% To-be-recycled product 3 described above and

10 wt% To-be-recycled product 2 described above as well as 0.2 parts by weight of glycerol monostearate (RIKEMAL S-100A from Riken Vitamin Co., Ltd.) and 0.1 parts by weight of pentaerythritol tetrakis[3-(3,5-di-tert-butyl-4-hydroxyphenyl)propionate] (ADK STAB AO-60 from ADEKA Corporation) as additives were melt-mixed in an extruder to obtain a resin composition. The extruder used for melt-mixing was a vented twin-screw extruder (TEM-26SX from Shibaura Machine Co. Ltd.; co-directional rotation) and extrusion conditions were as follows: a discharge rate of 15 kg/h, a screw speed of 300 rpm, a vacuum degree of vent of 3 kPa, and extrusion temperatures of 200°C, 220°C, 240°C, 260°C, 260°C, 260°C, 260°C, 260°C, 255°C, and 255°C, in this order, from the first feed port to the die section.

The physical properties of the obtained composition are shown in Table 1.

(Examples 5 and 6)

Resin compositions were obtained in the same manner as in Example 4, except that melt-mixing was performed in the proportions shown in Table 2.

The physical properties of the obtained compositions are shown in Table 2.

[Table 2]

| | | Example 4 | Example 5 | Example 6 | Comparative example 3 | Comparative example 2 | Polymerization example 3 | Polymerization example 2 |
|---|---|---|---|---|---|---|---|---|
| | | | | | (To-be-recycled product 3) | (To-be-recycled product 2) | (Resin of Comparative example 3 immediately after polymerization) | (Resin of Comparative example 2 immediately after polymerization) |
| Mixing ratio | Resin obtained in Polymerization example 3 (wt%) | 90 | 85 | 80 | 100 | 0 | 100 | 0 |
| | Resin obtained in Polymerization example 2 (wt%) | 10 | 15 | 20 | 0 | 100 | 0 | 100 |
| Composition ratio | BPEF (mol%) | 90.0 | 85.0 | 80.0 | 100.0 | 0.0 | 100.0 | 0.0 |
| | BNE (mol%) | 5.2 | 7.8 | 10.4 | 0.0 | 52.0 | 0.0 | 52.0 |
| | BPPEF (mol%) | 2.1 | 3.2 | 4.2 | 0.0 | 21.0 | 0.0 | 21.0 |
| | BNEF (mol%) | 2.7 | 4.1 | 5.4 | 0.0 | 27.0 | 0.0 | 27.0 |
| | Structural unit (A) | 5.2 | 7.8 | 10.4 | 0.0 | 52.0 | 0.0 | 52.0 |
| | Structural unit (B) | 94.8 | 92.2 | 89.6 | 100.0 | 48.0 | 100.0 | 48.0 |
| Physical properties | Total transmittance (TT) (%) | 86.7 | 86.5 | 86.5 | 86.5 | 85.6 | 88.0 | 86.8 |
| | YI | 9.7 | 10.2 | 10.5 | 9.4 | 14.3 | 4.7 | 7.9 |
| | Haze | 0.6 | 0.7 | 0.7 | 0.7 | 0.6 | 0.3 | 0.3 |
| | Refractive index (nD) | 1.642 | 1.643 | 1.645 | 1.639 | 1.669 | 1.639 | 1.669 |
| | Abbe (vd) | 23.0 | 22.8 | 22.5 | 23.5 | 19.4 | 23.5 | 19.5 |
| | Glass transition temperature (Tg) | 144 | 144 | 143 | 145 | 141 | 144.5 | 140 |
| | Melt volume rate (MVR) | 41 | 42 | 44 | 37 | 54 | 35 | 53 |
| | Average in-plane birefringence in lens (nm) | 10 | 9 | 8 | 15 | 30 | 15 | 24 |
| | Maximum in-plane birefringence in lens (nm) | 19 | 18 | 17 | 24 | 63 | 25 | 105 |

(Example 7)

100 parts by weight of a thermoplastic resin composed of 70 wt% To-be-recycled product 2 described above and 30 wt% To-be-recycled product 4 described above as well as 0.2 parts by weight of glycerol monostearate (RIKEMAL S-100A from Riken Vitamin Co., Ltd.) and 0.1 parts by weight of pentaerythritol tetrakis[3-(3,5-di-tert-butyl-4-hydroxyphenyl)propionate] (ADK STAB AO-60 from ADEKA Corporation) as additives were melt-mixed in an extruder to obtain a resin composition. The extruder used for melt-mixing was a vented twin-screw extruder (TEM-26SX from Shibaura Machine Co. Ltd.; co-directional rotation) and extrusion conditions were as follows: a discharge rate of 15 kg/h, a screw speed of 300 rpm, a vacuum degree of vent of 3 kPa, and extrusion temperatures of 200°C, 220°C, 240°C, 260°C, 260°C, 260°C, 260°C, 260°C, 255°C, and 255°C, in this order, from the first feed port to the die section.
The physical properties of the obtained composition are shown in Table 3.

(Examples 8 and 9)

Resin compositions were obtained in the same manner as in Example 7, except that melt-mixing was performed in the proportions shown in Table 2.
The physical properties of the obtained compositions are shown in Table 3.

[Table 3]

| | | Example 7 | Example 8 | Example 9 | Comparative example 2 (To-be-recycled product 2) | Comparative example 4 (Polymerized product 4) | Polymerization example 2 (Resin of Comparative example 2 immediately after polymerization) |
|---|---|---|---|---|---|---|---|
| Mixing ratio | Resin obtained in Polymerization example 2 (wt%) | 70 | 50 | 20 | 100 | 0 | 100 |
| | Resin obtained in Polymerization example 4 (wt%) | 30 | 50 | 80 | 0 | 100 | 0 |
| Composition ratio | BNE (mol%) | 49.9 | 48.5 | 46.4 | 52.0 | 45.0 | 52.0 |
| | BPPEF (mol%) | 14.7 | 10.5 | 4.2 | 21.0 | 0.0 | 21.0 |
| | BNEF (mol%) | 30.9 | 33.5 | 37.4 | 27.0 | 40.0 | 27.0 |
| | DPBHBNA (mol%) | 4.5 | 7.5 | 12.0 | 0.0 | 15.0 | 0.0 |
| | Structural unit (A) | 54.4 | 56.0 | 58.4 | 52.0 | 60.0 | 52.0 |
| | Structural unit (B) | 45.6 | 44.0 | 41.6 | 48.0 | 40.0 | 48.0 |
| | Total transmittance (TT) (%) | 86.0 | 85.9 | 86.0 | 85.6 | 86.1 | 86.8 |
| | YI | 13.2 | 13.1 | 12.5 | 14.3 | 12.3 | 7.9 |
| | Haze | 0.5 | 0.4 | 0.4 | 0.6 | 0.4 | 0.3 |
| | Refractive index (nD) | 1.673 | 1.675 | 1.679 | 1.669 | 1.681 | 1.669 |
| | Abbe (vd) | 19.0 | 18.7 | 18.3 | 19.4 | 18.1 | 19.5 |

(continued)

| | | Example 7 | Example 8 | Example 9 | Comparative example 2 (To-be-recycled product 2) | Comparative example 4 (Polymerized product 4) | Polymerization example 2 (Resin of Comparative example 2 immediately after polymerization) |
|---|---|---|---|---|---|---|---|
| Physical properties | Glass transition temperature (Tg) | 142 | 144 | 146 | 141 | 149 | 140 |
| | Melt volume rate (MVR) | 45 | 40 | 33 | 54 | 29 | 53 |
| | Average in-plane birefringence in lens (nm) | 31 | 43 | 50 | 30 | 52 | 24 |
| | Maximum in-plane birefringence in lens (nm) | 66 | 81 | 89 | 63 | 94 | 105 |

The molecular structures and abbreviations of the monomer compounds used in the polymerization examples above are follows.

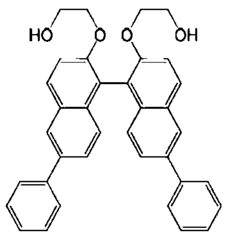

DPBHBNA

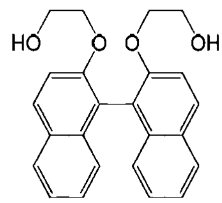

BNE

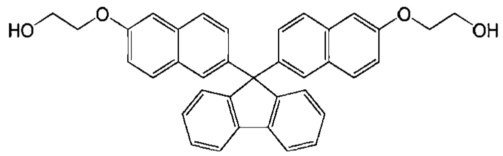

BNEF

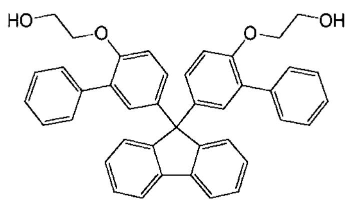

BPPEF

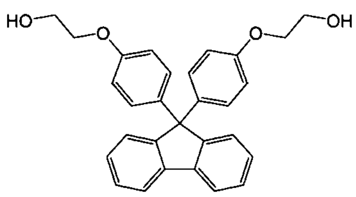

BPEF

As can be appreciated from the results of the examples and comparative examples described above, the thermoplastic resins in the form of a mixture tend to have lower in-plane birefringence values (mm) compared to the thermoplastic resins in the form of a copolymer, which substantially share the same types and contents of structural units (in particular, Examples 1-3 and Comparative examples 1 and 2; Examples 4-6 and Comparative examples 3 and 2; Examples 7-9 and Comparative example 4; etc.). Thus, it can be said that a thermoplastic resin composition of the present invention, which comprises a mixture of thermoplastic resins, has excellent birefringence.

Moreover, the thermoplastic resins in the form of a mixture tend to have higher MVR values and higher flowability compared to the thermoplastic resins in the form of a copolymer, which substantially share the same types and contents of structural units (in particular, Examples 7-9 and Comparative example 4; etc.). Thus, it can be said that a thermoplastic resin composition of the present invention, which comprises a mixture of thermoplastic resins, has good flowability and

moldability.

Also, when comparisons are made with polymerization examples, i.e., reference examples, that is, when the thermoplastic resins or resin compositions immediately after production and not reused are compared with the reused thermoplastic resin compositions of the examples with similar compositions, a decrease in the in-plane birefringence value or an increase in the MVR value, i.e., an improvement in flowability, can be observed.

Since the thermoplastic resin composition of the present invention comprises the essential thermoplastic resins as a mixture, it can easily and effectively be utilized while reusing the scrap material originating from the thermoplastic resins injected, for example, into mold gaps, such as the sprue, runner, and gate. Thus, the thermoplastic resin composition of the present invention can be produced by a simple production process, including reuse, and still easily achieve excellent properties, especially for optical applications.

## Claims

1. A thermoplastic resin composition comprising, as a mixture, a first thermoplastic resin containing a structural unit (A) derived from a monomer represented by general formula (1) below, and a second thermoplastic resin containing a structural unit (B) derived from a monomer represented by any of general formulas (2a)-(2c) below, wherein:

   at least either one of the first thermoplastic resin and the second thermoplastic resin is a copolymer having both the structural unit (A) and the structural unit (B); and
   the content of the structural unit (A) is 5-95 mol% and the content of the structural unit (B) is 5-95 mol%, relative to the total number of structural units of the first thermoplastic resin and the second thermoplastic resin:

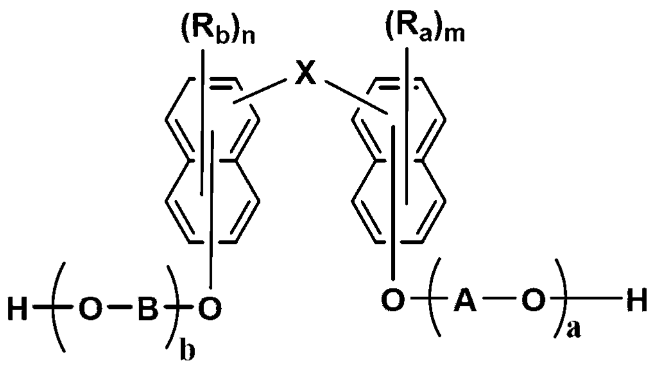

(1)

   (in general formula (1),
   $R_a$ and $R_b$ are each independently selected from the group consisting of a hydrogen atom, a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, an optionally substituted aryl group with 6-20 carbon atoms, an optionally substituted heteroaryl group with 6-20 carbon atoms containing one or more heteroatoms selected from O, N and S, an optionally substituted aryloxy group with 6-20 carbon atoms, and $-C{\equiv}C-R_h$,
   $R_h$ represents an optionally substituted aryl group with 6-20 carbon atoms, or an optionally substituted heteroaryl group with 6-20 carbon atoms containing one or more heteroatoms selected from O, N and S,
   X represents a single bond or an optionally substituted alkylene group with 3 or less carbon atoms,
   A and B each independently represent an optionally substituted alkylene group with 1-5 carbon atoms,
   m and n each independently represent an integer from 0 to 6, and
   a and b each independently represent an integer from 0 to 10),

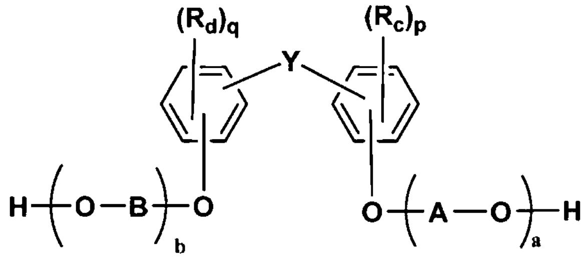

(2 a)

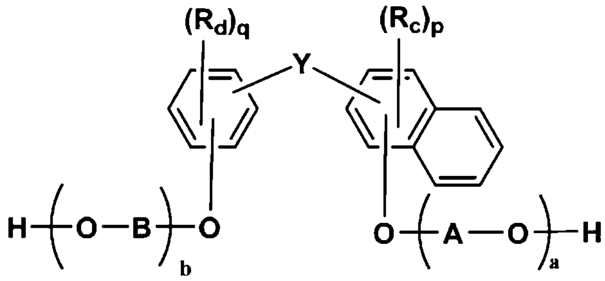

(2 b)

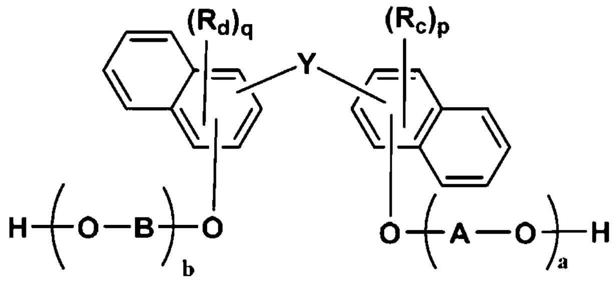

(2 c)

(in general formulas (2a)-(2c),

$R_c$ and $R_d$ are each independently selected from the group consisting of a hydrogen atom, a halogen atom, an optionally substituted alkyl group with 1-20 carbon atoms, an optionally substituted alkoxyl group with 1-20 carbon atoms, an optionally substituted cycloalkyl group with 5-20 carbon atoms, an optionally substituted cycloalkoxyl group with 5-20 carbon atoms, and an optionally substituted aryl group with 6-20 carbon atoms,

Y each independently represents an optionally substituted fluorene group,

A and B each independently represent an optionally substituted alkylene group with 1-5 carbon atoms,

p and q each independently represent an integer from 0 to 4, and

a and b each independently represent an integer from 0 to 10).

**2.** The thermoplastic resin composition according to claim 1, wherein the first thermoplastic resin and the second thermoplastic resin are both copolymers having the structural unit (A) and the structural unit (B).

**3.** The thermoplastic resin composition according to claim 1, wherein the second thermoplastic resin has only the structural unit (B).

**4.** The thermoplastic resin composition according to claim 1, wherein the content of the structural unit (A) is 30-65 mol% and the content of the structural unit (B) is 35-70 mol%, relative to the total number of structural units of the first thermoplastic resin and the second thermoplastic resin.

**5.** The thermoplastic resin composition according to claim 1, wherein at least either one of the first thermoplastic resin and the second thermoplastic resin further comprises a structural unit (C) derived from a monomer represented by formula (3) below:

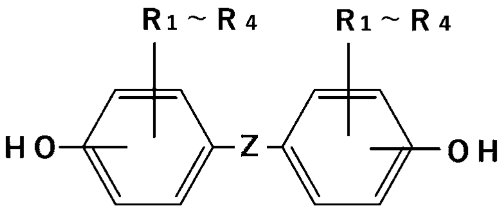

(3)

(in formula (3), $R_1$-$R_4$ are each independently a hydrogen atom, an alkyl group, or an aryl group, and Z is a single bond or a group represented by general formula (4) below,

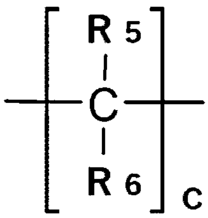

(4)

(in formula (4),
$R_5$ and $R_6$ are each a hydrogen atom, an alkyl group, or an aryl group, and
c represents an integer from 1 to 3).

**6.** The thermoplastic resin composition according to claim 1, wherein the thermoplastic resin composition comprises two or more types of thermoplastic resins containing the structural unit (A).

**7.** The thermoplastic resin composition according to claim 1, wherein the thermoplastic resin composition comprises two or more types of thermoplastic resins containing the structural unit (B).

**8.** The thermoplastic resin composition according to claim 1, wherein the thermoplastic resin comprises a mold release agent and/or an antioxidant.

**9.** The thermoplastic resin composition according to any one of claims 1-8, wherein the average value of in-plane birefringence in lens of the thermoplastic resin composition is 50 nm or less.

**10.** The thermoplastic resin composition according to any one of claims 1-8, wherein the maximum value of in-plane birefringence in lens of the thermoplastic resin composition is 60 nm or less.

**11.** An optical lens comprising the thermoplastic resin composition according to any one of claims 1-10.

**INTERNATIONAL SEARCH REPORT**

International application No. **PCT/JP2024/017655**

**A. CLASSIFICATION OF SUBJECT MATTER**

***C08L 69/00***(2006.01)i; ***C08G 64/06***(2006.01)i; ***G02B 1/04***(2006.01)i
FI: C08L69/00; C08G64/06; G02B1/04

According to International Patent Classification (IPC) or to both national classification and IPC

**B. FIELDS SEARCHED**

Minimum documentation searched (classification system followed by classification symbols)

C08L69; C08G64; G02B

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | WO 2020/175663 A1 (MITSUBISHI GAS CHEMICAL COMPANY, INC.) 03 September 2020 (2020-09-03)<br>claims 10, 56, paragraphs [0014], [0034], [0035], [0037], [0137], [0171], examples, table 11 | 1, 2, 4-11<br><br>3 |
| X<br><br>Y | JP 2017-179323 A (OSAKA GAS CHEMICALS CO., LTD.) 05 October 2017 (2017-10-05)<br>claims, paragraphs [0064], [0098], example 6 | 1, 2, 4-11<br><br>3 |
| Y | WO 2015/170691 A1 (MITSUBISHI GAS CHEMICAL COMPANY, INC.) 12 November 2015 (2015-11-12)<br>claims, paragraphs [0015], [0021], [0023], [0028], [0091], examples, tables 1, 7 | 3 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 July 2024** | **06 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

INTERNATIONAL SEARCH REPORT

International application No.
PCT/JP2024/017655

C. DOCUMENTS CONSIDERED TO BE RELEVANT

| Category* | Citation of document, with indication, where appropriate, of the relevant passages | Relevant to claim No. |
|---|---|---|
| X<br><br><br>Y | WO 2017/078071 A1 (MITSUBISHI GAS CHEMICAL COMPANY, INC.) 11 May 2017 (2017-05-11)<br>claims, paragraphs [0005], [0040], [0083], [0095], example 3 | 1, 2, 4-11<br><br><br>3 |
| X | WO 2019/176874 A1 (TEIJIN LIMITED) 19 September 2019 (2019-09-19)<br>claims, paragraphs [0001], [0005], [0040], [0093], example 4 | 1, 2, 4-11 |
| X | WO 2022/091780 A1 (TEIJIN LIMITED) 05 May 2022 (2022-05-05)<br>claims, paragraphs [0002], [0011], [0112], [0150], example 6 | 1-11 |
| A | WO 2019/044875 A1 (MITSUBISHI GAS CHEMICAL COMPANY, INC.) 07 March 2019 (2019-03-07)<br>entire text | 1-11 |

Form PCT/ISA/210 (second sheet) (July 2022)

**INTERNATIONAL SEARCH REPORT**
**Information on patent family members**

International application No.
**PCT/JP2024/017655**

| Patent document cited in search report | Publication date (day/month/year) | Patent family member(s) | Publication date (day/month/year) |
|---|---|---|---|
| WO 2020/175663 A1 | 03 September 2020 | US 2022/0145004 A1<br>claims 10, 56, paragraphs [0094]-[0103], [0167]-[0170], [0172], [0301], [0346]-[0348], examples, table 11<br>EP 3933457 A1<br>CN 113518934 A<br>KR 10-2021-0132134 A<br>TW 202100611 A | |
| JP 2017-179323 A | 05 October 2017 | (Family: none) | |
| WO 2015/170691 A1 | 12 November 2015 | US 2017/0044312 A1<br>claims, paragraphs [0018], [0050]-[0059], [0062], [0069], [0070], [0145]-[0147], examples, tables 1, 7<br>EP 3141570 A1<br>CN 106255712 A<br>KR 10-2017-0005792 A<br>TW 201546110 A | |
| WO 2017/078071 A1 | 11 May 2017 | US 2018/0312689 A1<br>claims, paragraphs [0005], [0090], [0141], [0156], example 3<br>KR 10-2018-0079360 A<br>CN 108350159 A<br>TW 201731910 A | |
| WO 2019/176874 A1 | 19 September 2019 | US 2021/0002420 A1<br>claims, paragraphs [0001], [0011], [0071], [0149], example 4<br>EP 3766913 A1<br>KR 10-2020-0088490 A<br>CN 111655754 A<br>TW 201938635 A | |
| WO 2022/091780 A1 | 05 May 2022 | (Family: none) | |
| WO 2019/044875 A1 | 07 March 2019 | US 2020/0181325 A1<br>entire text<br>EP 3677615 A1<br>KR 10-2020-0041975 A<br>CN 111094389 A<br>TW 201920353 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014073496 A
- WO 2015166951 A